# EUROPEAN PATENT SPECIFICATION

(11) **EP 4 092 308 B1**
(45) Date of publication and mention of the grant of the patent: **20.03.2024**
(21) Application number: 21174209.3
(22) Date of filing: 17.05.2021
(51) Int. Cl.: F16L 55/054

(54) **DAMPER ASSEMBLY FOR A PUMP**
DÄMPFERANORDNUNG FÜR PUMPEN
DISPOSITIF D'AMORTISSEMENT POUR POMPE

(43) Date of publication of application: 23.11.2022
(73) Proprietor: Chiaramello, Flavio, 12045 Fossano (CN) (IT)
(72) Inventor: Chiaramello, Flavio, 12045 Fossano (CN) (IT)
(74) Representative: Studio Torta S.p.A.

(56) References cited:
- US-A- 2 854 029
- US-A- 4 432 393

## Description

The invention relates to a damper assembly for pumps.

As it is known, a pump is a hydraulic operative machine operating between a suction duct and a delivery duct. The pump generally comprises a suction opening, which is fluidically connected to the suction duct, and a delivery opening, which is fluidically connected to the delivery duct.

Furthermore, the delivery duct is fluidically connected to a hydraulic element, towards which it conveys the liquid on which the pump operated. Said hydraulic element may be, for example, a user or the suction opening of the pump (in case the pump operates in a closed circuit).

It is known that the flow rate and the pressure of the fluid delivered by pumps can be subjected to changes, even significant ones, during use, due to the constructive features of the pumps themselves.

This problem can affect different types of pumps, among which there are reciprocating pumps, pneumatic pumps, lobe pumps or centrifugal pumps. For example, in lobe pumps, the flow rate and the pressure of the delivered fluid change as a function of the angular position of the lobes.

This variability of the flow rate and pressure values generally triggers vibrating phenomena of the delivery duct and can jeopardize the operation of the user arranged downstream of the delivery duct.

US-A-2854029 and US-A-4432393 disclose damper assemblies according to the preamble of claim 1.

Therefore, a damper assembly is needed, which can compensate for the pressure and flow rate oscillations of the fluid delivered by pumps.

The object of the invention is to provide a damper assembly, which allows manufacturers to fulfil at least one of the aforesaid needs in a simple and economic fashion.

The aforesaid object is reached by the present invention, as it relates to a damper assembly according to claim 1.

A preferred, non-limiting embodiment of the invention will now be described by way of example with reference to the accompanying drawings, wherein:
- figure 1 is a perspective view of the damper assembly according to the invention;
- figure 2 is a side view of the damper assembly of figure 1; and
- figure 3 is a cross section of the damper assembly according to plane III-III indicated in figure 2;
- figures 4 and 5 are schematic representations of respective hydraulic assemblies comprising the damper assembly of figure 1 to 3.

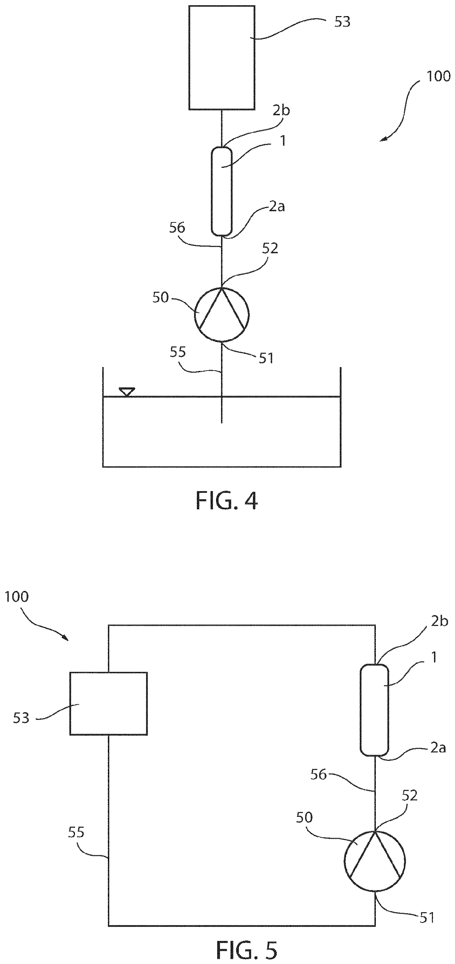

With reference to figures 4 and 5, number 100 indicates a hydraulic assembly comprising a pump 50 and a damper assembly 1 for the pump 50 according to the invention.

A pump is to be understood as any hydraulic operative machine operating between a suction duct 55 and a delivery duct 56. For example, the pump 50 can be a reciprocating pump, a lobe pump, a pneumatic pump or a centrifugal pump.

The pump 50 comprises a suction opening 51, which is fluidically connected to the suction duct 55, and a delivery opening 52, which is fluidically connected to the delivery duct 56.

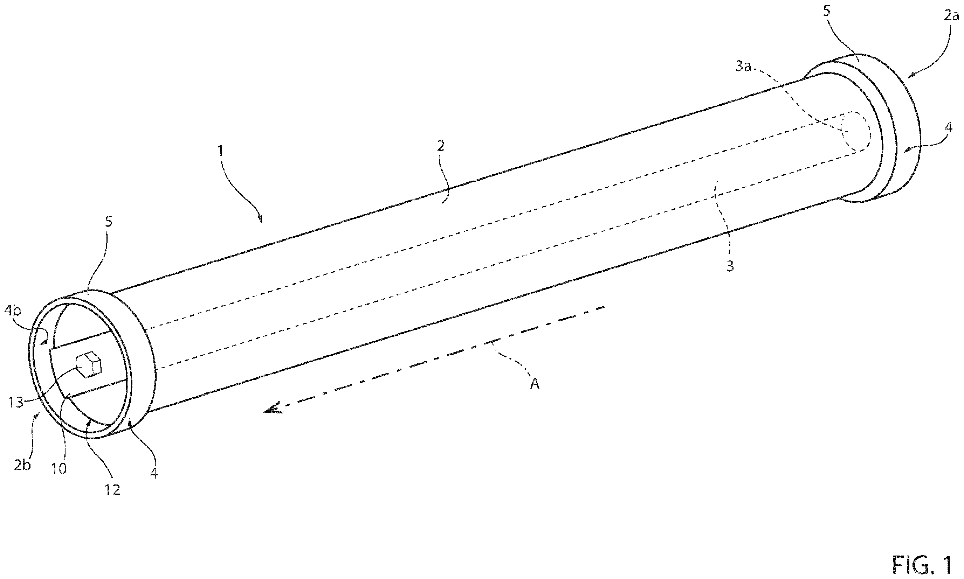

According to Figure 1, the damper assembly 1 comprises a pipe element 2, which is provided with two ends 2a and 2b opposite one another.

The hydraulic assembly 100 further comprises a hydraulic element 53, which is arranged downstream of the pump 50 according to the direction of the flow delivered by the pump 50 (Figures 4 and 5). Said hydraulic element 53 can be, for example, a user (Figure 4) or the suction opening 51 (in case the pump operates 50 in a closed circuit, as shown in Figure 5).

In detail, the end 2a is fluidically connected to the delivery opening 52 and the end 2b is fluidically connected to the hydraulic element 53.

The pipe element 2 is adapted to be flown through, between its two ends 2a and 2b, by the liquid on which the pump 50 operated. Therefore, in other words, the damper assembly 1 is part of the delivery duct 56 and is in line with the pump 50.

In the embodiment shown herein, the pipe element 2 is a rigid duct with a circular section and defines a longitudinal axis A. However, the pipe element 2 can have a cross section shape other than circular.

The liquid flowing through the pipe element 2 is characterized by a pressure p1 and by a flow rate which are both variable in time. In particular, the variability of the pressure p1 and of flow rate is determined by the constructive features of the pump 50.

The liquid can also be subjected to pressure drops due to the fluid-dynamic losses that take place while it flows through the pipe element 2. Therefore, the pressure p1 also changes as a function of the position of the liquid downstream of the delivery opening 52. Hereinafter, the pressure p1 is the pressure of the liquid in the area of the delivery opening 52.

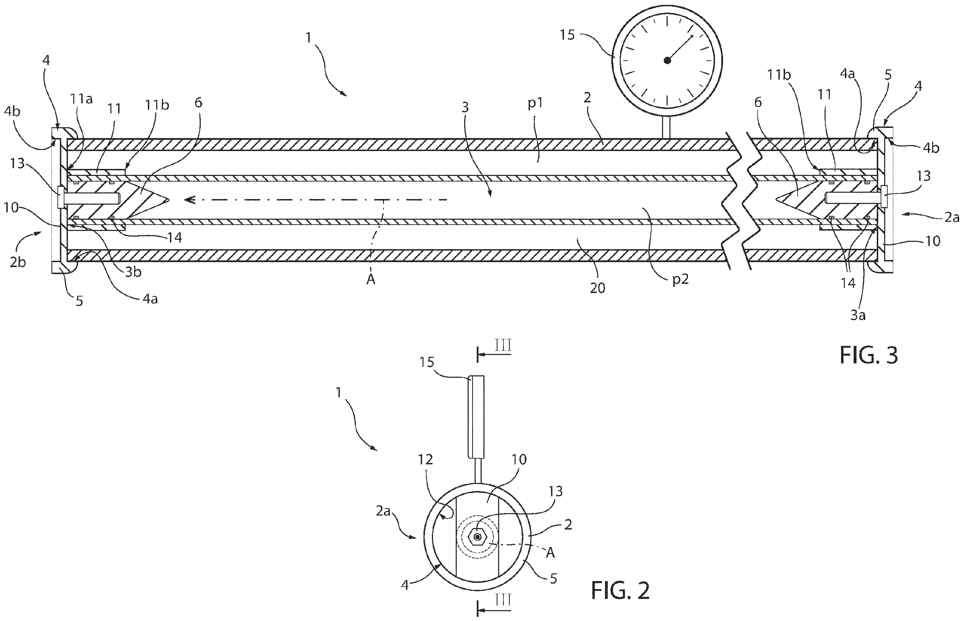

According to Figure 3, each one of the two ends 2a, 2b is provided with a connection element 4 to mechanically couple the ends 2a, 2b to the delivery opening 52 and to the ducts fluidically connected to the hydraulic element 53, respectively.

As shown herein, each connection element 4 comprises a seat 4a, which is engaged by a respective end 2a, 2b of the pipe element 2, and a seat 4b opposite the seat 4a (Figure 3).

Said seats 4a and 4b are defined by a contour portion 5 of the respective connection element 4.

In particular, the seat 4b of the connection element 4 arranged on the side of the end 2a is engaged by the delivery opening 52 or by one or more pipe elements fluidically connected to the delivery opening 52. The seat 4b of the connection element 4 arranged on the side of the end 2b is engaged by the hydraulic element 53 or by one or more pipe elements fluidically connected to the hydraulic element 53.

The seats 4a have a shape corresponding to the shape of the ends 2a, 2b. Since, in the embodiment shown herein, the pipe element 2 has a circular cross section, the seats 4a have a cylindrical shape and each connection element 4 is fitted around the outer cylindrical surface of the ends 2a and 2b.

The damper assembly 1 comprises a closed chamber 3, which is housed inside the pipe element 2 and contains a gaseous fluid at a pressure p2 (Figure 3). The closed 3 chamber is deformable as a function of the difference between the pressure p2 and the pressure p1.

The fact that the chamber 3 is closed implies that the chamber 3 is fluid-dynamically isolated from the outside and, in particular, from the pipe element 2. Therefore, the inlet and the outlet of any fluid into/out of the closed chamber 3 are forbidden.

In detail, the closed chamber 3 deforms so as change the pressure p2 of the fluid contained within it.

A contraction of the closed chamber 3 corresponds to an increase in the pressure p2, whereas an expansion of the closed chamber 3 corresponds to a decrease in the pressure p2.

The closed chamber 3 is adapted to deform so as to allow the pressure p2 to be equal to the pressure p1 instant by instant.

Since the pressure p1 is generally variable in time, the pressure difference between the pressure p2 and the pressure p1 is generally variable as well. As a consequence, the extent of the deformation of the closed chamber 3 is generally variable in time.

The gaseous fluid contained in the closed chamber 3 can be, for example, air introduced at an introduction pressure p02 equal to the atmospheric pressure. Alternatively, the gaseous fluid could be a gas or a gas mixture other than air and the introduction pressure p02 could be different, in particular greater than the atmospheric pressure.

According to Figure 3, the closed chamber 3 has a tubular shape and is arranged coaxially to the longitudinal axis A. Furthermore, the closed chamber 3 extends over the entire length of the pipe element 2 parallel to the longitudinal axis A and has a circular section.

The closed chamber 3 is made of a deformable material and is resistant to high temperatures. For example, the closed chamber 3 is made of silicone.

Basically, inside the damper assembly 1 there are the gaseous fluid, which is contained in the closed camber 3, and the liquid delivered by the pump 50, which flows inside the pipe element 2 on the outside of the closed chamber 3.

In particular, the pipe element 2 comprises a portion 20, where the fluid delivered by the pump 50 flows. This portion 20 is on the outside of the closed portion 3 and is concentric relative to the latter. Since, in the embodiment shown herein, the pipe element 2 and the closed chamber 3 have a circular section, the cross section of the portion 20 substantially has the shape of an annulus.

The deformation of the closed chamber 3 corresponds to a variation in the volume of the portion 20. In detail, a compression of the closed chamber 3 corresponds to an increase in the volume of the portion 20 and an expansion of the closed chamber 3 corresponds to a decrease in the volume of the portion 20. This change in the volume of the portion 20 compensates for time fluctuations of the pressure p1 and of the flow rate.

Hence, the damper assembly 1 is a passive device, for it is operated only as a function of the difference between the pressures p1 and p2. This means that the damper assembly 1 operates without being supplied by an external source of energy, for example of electrical energy.

Furthermore, the damper assembly 1 is a self-compensating device, since it balances out the fluctuations of the pressure p1 based on the extent of the fluctuations themselves.

The closed chamber 3 comprises, in turn, two ends 3a, 3b, which are opposite one another along the longitudinal axis A. The two ends 3a and 3b are fixed, in turn, to the ends 2a and 2b, respectively (Figure 3).

Since the ends 3a and 3b are respectively fixed to the ends 2a and 2b of the pipe element 2, which is a rigid duct, the closed chamber 3 substantially deforms in a radial manner relative to the longitudinal axis A.

According to Figure 2, each connection element 4 comprises a bracket 10 and a bushing element 11, which are integral to one another and to the contour portion 5. In particular, each bracket 10 is arranged on the side of the seat 4b of the respective connection element 4 and the bushing element 11 is arranged on the side of the seat 4a.

Each bushing element 11 is coaxial to the longitudinal axis A and has an axial end 11a, at which it is fixed to the bracket 10, and an opposite axial end 11b, which is free.

In detail, the ends 3a and 3b are engaged in the bushing elements 11 of the respective connection elements 4 on the side of the axial ends 11b. More in detail, the bushing elements 11 are arranged so as to surround the respective ends 3a and 3b.

According to Figure 2, furthermore, the contour portion 5, the bracket 10 and the bushing element 11 of each connection element 4 define an opening 12, through which the liquid is let into/out of the pipe element 2 (Figure 2).

The damper assembly 1 also comprises two support elements 6 (Figure 3). Each support element 6 is fixed to the bracket 10 of a respective connection element 4 by means of coupling elements 13.

Each support element 6 engages a respective end 3a, 3b of the closed chamber 3. According to Figure 3, furthermore, the support elements 6 are radially on the inside relative to the closed chamber 3.

The support elements 6 are adapted to keep the closed chamber 3 under tension along the axis A and to limit the radial compression of the closed chamber 3 at ends 3a and 3b.

In the embodiment shown herein, the connection means 13 of each support element 6 comprise a first hole made in the respective bracket 10, a second hole made in the support element 6 and a screw engaging the first and the second hole.

According to Figure 3, furthermore, each support element 6 comprises a cylindrical stretch and a stretch with a conical shape, which is axially opposite the cylindrical stretch. In particular, the cylindrical stretch has an axial length that is substantially identical to the length of the bushing element 11 parallel to the axis A and is arranged on the side of the bracket 10.

The damper assembly 1 further comprises a plurality of sealing means 14, which are interposed between the closed chamber 3 and the support elements 6 in order to prevent the gaseous fluid from leaking towards the outside of the chamber 3.

In the embodiment shown herein, the sealing means 14 comprise two gaskets, for example two O-rings, between the closed chamber 3 and each support element 6. Preferably, the two gaskets are axially spaced apart from one another parallel to the longitudinal axis A (Figure 3).

The damper assembly 1 may further comprise a pressure measuring device, for example a manometer 15.

The manometer 15 is fluidically connected to the portion 20 and is adapted to measure the pressure of the liquid flowing inside the damper assembly 1.

The closed chamber 3 is adapted to compensate for greater pressure and flow rate fluctuations as its volume increases. Therefore, for example, given the same diameter of the closed chamber 3, a closed chamber 3 having a greater length parallel to the axis A is capable of compensating for greater pressure and flow rate variations compared to a closed chamber 3 having a smaller length.

In order to limit the length of the pipe element 2 and of the closed chamber 3, the introduction pressure p02 of the gaseous fluid can be increased so as to pre-load the closed chamber 3. Indeed, a closed chamber 3 is capable of compensating for greater pressure and flow rate variations as the introduction pressure p02 increases, given the same volume thereof.

In use, when the pump 50 is idle and does not deliver liquid through the delivery opening 52, the closed chamber 3 is substantially undeformed and the pressure p2 is equal to the introduction pressure p02.

When the pump 50 is active, the liquid is delivered through the delivery opening 52, which is fluidically connected - in a direct or indirect manner - to the end 2a of the pipe element 2 (Figures 4 and 5). The liquid delivered at the pressure p1 flows through the opening 12 in the area of the end 2a and flows along the portion 20 towards the end 2b.

The closed chamber 3 instantaneously deforms as a function of the difference between the pressure p1 of the liquid and the pressure p2 of the gaseous fluid, so that the pressure p2 becomes equal to the pressure p1. In detail, if the pressure p1 is greater than the pressure p2, the closed chamber 3 gets compressed and the volume of the portion 20 increases and vice versa.

In particular, when the closed chamber 3 is compressed (expands) and the volume of the portion 20 increases (decreases), the liquid flowing in the portion 20 has more (less) space available. Therefore, time fluctuations in the flow rate and the pressure of the liquid delivered by the pump 50 are limited by the instantaneous deformation of the closed chamber 3.

The features of the damper assembly 1 according to the invention lead to evident advantages that can be obtained using it.

The damper assembly 1 comprises a closed chamber 3, which is housed inside the pipe element 2 and is deformable as a function of the difference between the pressures p1 and p2. As a consequence, the damper assembly 1 is capable of compensating for the pressure and flow rate fluctuations of the liquid delivered by the pump 50 in a simple and economic fashion. Indeed, the damper assembly 1 is a passive auto-compensating device, which can easily be inserted in existing pipes and requires a very small maintenance.

Since the closed chamber 3 is coaxial to the longitudinal axis A, the compression stresses affecting it are uniformly distributed around the entire circumferential extension thereof.

Furthermore, in case the gaseous fluid contained in the closed chamber 3 has an introduction pressure p02 that is greater than the atmospheric pressure, it is possible to compensate for very large pressure and flow rate variations, even with limited volumes of the closed chamber 3.

Finally, it is clear that the damper assembly 1 described above can be subjected to changes and variations, without for this reason going beyond the scope of protection of the invention.

In particular, the damper assembly 1 could comprise two or more pipe elements 2, each with a respective closed chamber 3, arranged in series or in parallel to one another.

The end 2a could be fluidically connected to several pumps 50 connected in series or in parallel to one another.

The pipe element 2 could have a non-straight longitudinal axis A. For example, the pipe element 2 could be curved or angled.

The damper assembly 1 could be arranged upstream of the pump 50, namely the end 2b could be fluidically connected to the suction opening 51.

## Claims

1. - A damper assembly (1) for a pump (50) comprising a pipe element (2) provided with a first end (2a), which is adapted to be fluidically connected to a delivery opening (52) of said pump (50), and with a second end (2b) opposite said first end (2a); said pipe element (2) being adapted to be flown through by a fluid delivered by said pump (50) at a first pressure (p1) according to a flow flowing from said first end (2a) to said second end (2b); said second end (2b) being fluidically connectable to a hydraulic element (53) arranged downstream of said delivery opening (52) according to said flow;
said damper assembly (1) comprising a closed chamber (3), which is housed inside said pipe element (2) and contains, in use, a gaseous fluid at a second pressure (p2); said closed chamber (3) being deformable, in use, as a function of the difference between said first pressure (p1) and said second pressure (p2);
said pipe element (2) defining a longitudinal axis (A) and said closed chamber (3) being coaxial to said longitudinal axis (A);
said closed chamber (3) comprising a third end (3a) and a fourth end (3b) opposite one another; said third end (3a) being fixed to said first end (2a) and said fourth end (3b) being fixed to said second end (2b);
said damper assembly (1) further comprising:
- two connection elements (4), which are arranged one at said first end (2a) and the other at said second end (2b) ;
- two support elements (6), each fixed to a respective connection element (4) and engaged one by the third end (3a) and the other by the fourth end (3b);
said support elements (6) being adapted to keep, in use, said closed chamber (3) under tension along said longitudinal axis (A) and to limit, in use, the radial compression of said closed chamber (3) at said third and fourth ends (3a, 3b);
**characterized in that** each said connection element (4) comprises a first seat (4a), which is engaged by a respective said first or second end (2a, 2b), and a second seat (4b) opposite said first seat(4a); said first and second seats (4a, 4b) being defined by a contour portion (5) of said respective connection element (4);
each said connection element (4) comprising a bracket (10) and a bushing element (11), which are integral to one another and to said contour portion (5);
each said bushing element (11) being coaxial to said longitudinal axis (A) and having a first axial end (11a), at which it is fixed to said bracket (10), and a second axial end (11b), which is free and axially opposite to said first axial end (11a);
each said support element (6) being fixed to a respective said bracket (10) by means of coupling elements (13) ;
said third and fourth ends (3a, 3b) being engaged in said bushing elements (11) of respective said connection elements (4) on the side of said second axial ends (11b).

2. - The damper assembly according to claim 1, **characterized in that** said closed chamber (3) extend over the entire length of said pipe element (2) along said longitudinal axis (A).

3. - The damper assembly according to claim 1 or 2, **characterized in that** said closed chamber (3) is configured so that said gaseous fluid is introduced, in use, into it at an introduction pressure (p02) that is equal to the atmospheric pressure.

4. - The damper assembly according to claim 1 or 2, **characterized in that** closed chamber (3) is configured so that said gaseous fluid is introduced, in use, into it at an introduction pressure (p02) that is greater than the atmospheric pressure.

5. - The damper assembly according to any one of the preceding claims, **characterized in that** it comprises sealing means (14), which are interposed between said closed chamber (3) and each support element (6).

6. - The damper assembly according to any one of the preceding claims, **characterized in that** said closed chamber (3) is made of silicone.

7. - The damper assembly according to any one of the preceding claims, **characterized in that** it is a passive device.

8. - A hydraulic assembly comprising:
- a pump (50) comprising a suction opening (51) and a delivery opening (52); and
- a damper assembly (1) according to any one of the preceding claims, which is fluidically connected to said delivery opening (52).

9. - The hydraulic assembly according to claim 8, **characterized in that** it comprises a user (53), which is fluidically connected to said damper assembly (1).

## Patentansprüche

1. Eine Dämpferanordnung (1) für eine Pumpe (50), aufweisend ein Rohrelement (2), das mit einem ersten Ende (2a) versehen ist, das ausgelegt ist, um mit einer Abgabeöffnung (52) der Pumpe (50) strömungstechnisch verbunden zu werden, und mit einem zweiten Ende (2b) gegenüber dem ersten Ende (2a); wobei das Rohrelement (2) ausgelegt ist, um von einem Fluid durchströmt werden zu können, das von der Pumpe (50) mit einem ersten Druck (p1) abgegeben wird, entsprechend einer Strömung, die vom ersten Ende (2a) zum zweiten Ende (2b) fließt; wobei das zweite Ende (2b) entsprechend der Strömung mit einem hydraulischen Element (53) strömungstechnisch verbindbar ist, das stromabwärts der Abgabeöffnung (52) angeordnet ist; **dadurch gekennzeichnet, dass** die Dämpferanordnung (1) eine geschlossene Kammer (3) umfasst, die im Inneren des Rohrelements (2) untergebracht ist und im Betrieb ein gasförmiges Fluid unter einem zweiten Druck (p2) enthält; wobei die geschlossene Kammer (3) im Gebrauch als Funktion der Differenz zwischen dem ersten Druck (p1) und dem zweiten Druck (p2) verformbar ist;
wobei das Rohrelement (2) eine Längsachse (A) definiert und die geschlossene Kammer (3) koaxial zu der Längsachse (A) ist;
wobei die geschlossene Kammer (3) ein drittes Ende (3a) und ein viertes Ende (3b) aufweist, die einander gegenüberliegen; wobei das dritte Ende (3a) an dem ersten Ende (2a) befestigt ist und das vierte Ende (3b) an dem zweiten Ende (2b) befestigt ist; wobei die Dämpferanordnung (1) ferner aufweist:
- zwei Verbindungselemente (4) von denen eines an dem ersten Ende (2a) und das andere an dem zweiten Ende (2b) angeordnet ist;
- zwei Stützelemente (6), die jeweils an einem entsprechenden Verbindungselement (4) befestigt sind und wobei eines an dem dritten Ende (3a) und das andere an dem vierten Ende (3b) angreift;
wobei die Stützelemente (6) ausgelegt sind, um die geschlossene Kammer im Gebrauch entlang der Längsachse (A) unter Spannung zu halten und, im Gebrauch, die radiale Kompression der geschlossenen Kammer (3) an dem dritten und vierten Ende (3a, 3b) zu begrenzen;
**dadurch gekennzeichnet, dass** jedes Verbindungselement (4) einen ersten Sitz (4a) aufweist, der von einem jeweiligen ersten oder zweiten Ende (2a, 2b) gegriffen ist und einen zweiten Sitz (4b) gegenüber dem ersten Sitz (4a); wobei der erste und der zweite Sitz (4a, 4b) definiert sind über einen Konturabschnitt (5) des jeweiligen Verbindungselements (4);
wobei jedes Verbindungselement (4) einen Träger (10) und ein Lagerelement (11) aufweist, die miteinander und zu dem Konturabschnitt (5) integral sind;
wobei jedes Lagerelement (11) koaxial zu der Längsachse (A) ist und ein erstes axiales Ende (11a) hat, bei dem es an dem Träger (10) befestigt ist und ein zweites axiales Ende (11b), das frei ist und axial dem ersten axialen Ende (11a) gegenüber liegt;
wobei jedes Stützelement (6) an einem jeweiligen der Träger (10) mittels Kupplungselementen (13) befestigt ist;
wobei die dritten und vierten Enden (3a, 3b) in den Lagerelementen (11) jeweiliger Verbindungselemente (4) an der Seite der zweiten axialen Enden (11b) gegriffen sind.

2. Die Dämpferanordnung nach Anspruch 1, **dadurch gekennzeichnet, dass** sich die geschlossene Kammer (3) über die gesamte Länge des Rohrelements (2) entlang der Längsachse (A) erstreckt.

3. Die Dämpferanordnung nach Anspruch 1 oder 2, **dadurch gekennzeichnet, dass** die geschlossene Kammer (3) derart ausgestaltet ist, dass das gasförmige Fluid im Betrieb mit einem Einleitungsdruck (p02) in sie eingeleitet wird, der gleich dem Atmosphärendruck ist

4. Die Dämpferanordnung nach einem der Ansprüche 1 oder 2, **dadurch gekennzeichnet, dass** die geschlossene Kammer (3) derart ausgestaltet ist, dass das gasförmige Fluid im Betrieb mit einem Einleitungsdruck (p02) in sie eingeleitet wird, der größer als der Atmosphärendruck ist.

5. Die Dämpferanordnung nach einem der vorstehenden Ansprüche, **dadurch gekennzeichnet, dass** sie Dichtungsmittel (14) aufweist, die zwischen der geschlossenen Kammer (3) und jedem Stützelement (6) angeordnet sind.

6. Die Dämpferanordnung nach einem der vorstehenden Ansprüche, **dadurch gekennzeichnet, dass** die geschlossene Kammer (3) aus Silikon besteht.

7. Die Dämpferanordnung nach einem der vorstehenden Ansprüche, **dadurch gekennzeichnet, dass** sie eine passive Vorrichtung ist.

8. Eine Hydraulikanordnung, aufweisend:
- eine Pumpe (50) mit einer Ansaugöffnung (51) und einer Abgabeöffnung (52); und
- eine Dämpferanordnung (1) nach einem der vorstehenden Ansprüche, die fluidmäßig mit der Abgabeöffnung (52) verbunden ist.

9. Die Hydraulikanordnung nach Anspruch 8, **dadurch gekennzeichnet, dass** sie einen Nutzer (53) umfasst, der fluidmäßig mit der Dämpferanordnung (1) verbunden ist.

## Revendications

1. Ensemble d'amortisseur (1) pour une pompe (50) comprenant un élément de tuyau (2) prévu avec une première extrémité (2a), qui est adaptée pour être raccordée, de manière fluidique, à une ouverture de distribution (52) de ladite pompe (50), et avec une deuxième extrémité (2b) opposée à ladite première extrémité (2a) ; ledit élément de tuyau (2) étant adapté pour être traversé par un fluide distribué par ladite pompe (50) à une première pression (p1) selon un écoulement s'écoulant de ladite première extrémité (2a) à ladite deuxième extrémité (2b) ; ladite deuxième extrémité (2b) pouvant être raccordée, de manière fluidique, à un élément hydraulique (53) agencé en aval de ladite ouverture de distribution (52) selon ledit écoulement ;
ledit ensemble d'amortisseur (1) comprenant une chambre fermée (3), qui est logée à l'intérieur dudit élément de tuyau (2) et contient, à l'usage, un fluide gazeux à une seconde pression (p2) ; ladite chambre fermée (3) étant déformable, à l'usage, en fonction de la différence entre ladite première pression (p1) et ladite seconde pression (p2) ;
ledit élément de tuyau (2) définissant un axe longitudinal (A) et ladite chambre fermée (3) étant coaxiale par rapport audit axe longitudinal (A) ;
ladite chambre fermée (3) comprenant une troisième extrémité (3a) et une quatrième extrémité (3b) opposées l'une par rapport à l'autre ; ladite troisième extrémité (3a) étant fixée à ladite première extrémité (2a) et ladite quatrième extrémité (3b) étant fixée à ladite deuxième extrémité (2b) ;
ledit ensemble d'amortisseur (1) comprenant en outre :
deux éléments de raccordement (4) qui sont agencés, l'un au niveau de ladite première extrémité (2a) et l'autre au niveau de ladite deuxième extrémité (2b) ;
deux éléments de support (6), chacun fixé sur un élément de raccordement (4) respectif et mis en prise, l'un par la troisième extrémité (3a) et l'autre par la quatrième extrémité (3b) ;
lesdits éléments de support (6) étant adaptés pour maintenir, à l'usage, ladite chambre fermée (3) sous tension le long dudit axe longitudinal (A) et pour limiter, à l'usage, la compression radiale de ladite chambre fermée (3) au niveau desdites troisième et quatrième extrémités (3a, 3b) ;
**caractérisé en ce que** chacun desdits éléments de raccordement (4) comprend un premier siège (4a), qui est mis en prise par ladite première ou deuxième extrémité (2a, 2b) respective et un second siège (4b) opposé audit premier siège (4a) ; lesdits premier et second sièges (4a, 4b) étant définis par une partie de contour (5) dudit élément de raccordement (4) respectif ;
chacun desdits éléments de raccordement (4) comprenant :
une console (10) et un élément de douille (11), qui sont solidaires l'un de l'autre et de ladite partie de contour (5) ;
chacun desdits éléments de douille (11) étant coaxial par rapport audit axe longitudinal (A) et ayant une première extrémité axiale (11a), au niveau de laquelle il est fixé à ladite console (10), et une seconde extrémité axiale (11b), qui est libre et axialement opposée à ladite première extrémité axiale (11a) ;
chacun desdits éléments de support (6) étant fixé à ladite console (10) respective au moyen d'éléments de couplage (13) ;
lesdites troisième et quatrième extrémités (3a, 3b) étant mises en prise dans lesdits éléments de douille (11) desdits éléments de raccordement (4) respectifs sur le côté desdites secondes extrémités axiales (11b).

2. Ensemble d'amortisseur selon la revendication 1, **caractérisé en ce que** ladite chambre fermée (3) s'étend sur toute la longueur dudit élément de tuyau (2) le long dudit axe longitudinal (A).

3. Ensemble d'amortisseur selon la revendication 1 ou 2, **caractérisé en ce que** ladite chambre fermée (3) est configurée de sorte que ledit fluide gazeux est introduit, à l'usage, dans cette dernière à une pression d'introduction (p02) qui est égale à la pression atmosphérique.

4. Ensemble d'amortisseur selon la revendication 1 ou 2, **caractérisé en ce que** la chambre fermée (3) est configurée de sorte que ledit fluide gazeux est introduit, à l'usage, dans cette dernière, à une pression d'introduction (p02) qui est supérieure à la pression atmosphérique.

5. Ensemble d'amortisseur selon l'une quelconque des revendications précédentes, **caractérisé en ce qu'**il comprend des moyens d'étanchéité (14) qui sont intercalés entre ladite chambre fermée (3) et chaque élément de support (6).

6. Ensemble d'amortisseur selon l'une quelconque des revendications précédentes, **caractérisé en ce que** ladite chambre fermée (3) est réalisée à partir de silicone.

7. Ensemble d'amortisseur selon l'une quelconque des revendications précédentes, **caractérisé en ce qu'**il s'agit d'un dispositif passif.

8. Ensemble hydraulique comprenant :
une pompe (50) comprenant une ouverture d'aspiration (51) et une ouverture de distribution (52) ; et
un ensemble d'amortisseur (1) selon l'une quelconque des revendications précédentes, qui est raccordé, de manière fluidique, à ladite ouverture de distribution (52).

9. Ensemble hydraulique selon la revendication 8, **caractérisé en ce qu'**il comprend un utilisateur (53), qui est raccordé, de manière fluidique, audit ensemble d'amortisseur (1).
